# EUROPÄISCHE PATENTSCHRIFT

(11) **EP 2 328 738 B1**
(45) Veröffentlichungstag und Bekanntmachung des Hinweises auf die Patenterteilung: **12.03.2014**
(21) Anmeldenummer: 09782431.2
(22) Anmeldetag: 01.09.2009
(51) Int. Cl.: B29C 49/12, B29C 49/78, B29C 49/64, B29C 49/06

(54) **TEMPERIERTE RECKSTANGE**
TEMPERATURE-CONTROLLED STRETCH ROD
TIGE D'ÉTIRAGE CONDITIONNÉE THERMIQUEMENT

(30) Priorität: 18.09.2008 DE 102008047891
(43) Veröffentlichungstag der Anmeldung: 08.06.2011
(73) Patentinhaber: Krones AG, 93073 Neutraubling (DE)
(72) Erfinder: BLOCHMANN, Erik, 93073 Neutraubling (DE); HANER, Arno, 93109 Wiesent (DE)
(74) Vertreter: Benninger, Johannes
(86) Internationale Anmeldenummer: PCT/EP2009/061245
(87) Internationale Veröffentlichungsnummer: WO 2010/031680

(56) Entgegenhaltungen:
- EP-A1- 0 511 617
- JP-A- 5 131 528
- JP-A- 60 180 814

## Beschreibung

Die Erfindung betrifft eine hohl ausgebildete Recksstange einer Vorrichtung zum Blasformen von Behältern, wobei die Reckstange ein Temperaturregulierungsmedium in einer inneren Führung zur Temperaturregulierung aufweist.

Aus der Offenlegungsschrift DE 2 517 186 A1 ist bereits ein Temperierelement zur stufenlosen Wärmezu- oder -abfuhr mit flüssigen oder gasförmigen Heiz- oder Kühlmedium bekannt, welches insbesondere für die Kunststoffverarbeitung verwendet wird. Das Temperierelement ist als ein hohles Rohr durch eine Trennwand in zwei axial nebeneinander liegenden Kammern geteilt und mit einem Gehäuse verbunden. Am freien Ende ist das Rohr mit einem Deckel verschlossen und hier durch eine Aussparung mit beiden axial nebeneinander liegenden Kammern verbunden, so dass ein Kreislauf bzw. ein Zwangsrücklauf des Mediums gewährleistet ist. Mit dieser Bauweise erübrigen sich die aufwendigen Kreislaufbohrungen und deren Abdichtung und können ohne Rücksicht auf die Werkzeugbauart in betriebsnaher und wirkungsvoller Lage eingesetzt werden. Jedoch ist in diesem Fall zu berücksichtigen, dass hierbei die komplette Reckstange temperiert wird.

In der Patentschrift EP 0 511 617 B1 ist ein Verfahren offenbart, bei dem es sich um ein Streckblas-Spritzgießen eines Hohlkörpers handelt. Dieses Verfahren wird mittels einer hohl ausgebildeten Reckstange durchgeführt. Hierfür wird die Temperatur des Endabschnitts der hohl ausgebildeten Reckstange reguliert, so dass die Temperatur niedriger eingestellt ist als die des Vorformlings. Somit wird in der Erfindung ein direkter Wärmeaustausch zwischen den sich gegenseitig berührenden Teilen gefördert. Dies wird dadurch erreicht, dass ein Temperaturregulierungsmedium durch die Reckstange zirkuliert, indem das Temperaturregulierungsmedium durch eine innere Röhre geleitet wird und nach unten zum Endabschnitt der Reckstange strömt. Anschließend wird dieses Medium durch das äußere ringförmige Rohr wieder nach oben geleitet. Auch bei diesem Verfahren wird die komplette Reckstange der Temperaturregulierung ausgesetzt. Hierdurch entsteht eine Kondensatbildung. Dieses Kondensat bildet sich am Vorformling.

Die JP 05 131528 A offenbart eine hohl ausgebildete Reckstange einer Vorrichtung zum Blasformen von Behältern. Die Reckstange weist ein Temperaturregulierungsmedium in einer inneren Führung zur Temperaturregulierung auf. Zwischen der inneren Führung und einer äußeren Wandung einer Außenhülle der Reckstange ist ein Abstand ausgebildet.

Die bekannten Temperierelemente können bislang die Kondensatbildung am Vorformling noch nicht verhindern. Auch bei ständig zunehmender Produktionsrate wird ein großes Augenmerk auf die Temperatur der Reckstange gelegt, bspw. auf die Einhaltung einer konstanten Temperatur an der Kontaktstelle der Reckstangenspitze und des Vorformlings. Die Temperaturregelung erfolgt gemäß dem Stand der Technik bislang überwiegend derart, dass entweder das für die Temperierung der Reckstange benötigte Temperierregulierungsmedium durch einen Vorlauf in die Reckstange gegeben wird und über einen Rücklauf zurückgeleitet wird oder dass das Medium am Ende des Vorlaufs ausströmt und über zwei Rückläufe nach oben zurück geleitet wird. Doch in beiden Fällen wird die Kondensatbildung am Vorformling nicht vermieden, da die komplette Reckstange der Temperierung bzw. Kühlung ausgesetzt ist.

Aufgabe der Erfindung ist es, eine Reckstange bereitzustellen, welche beim Temperieren der Reckstangenspitze eine Kondensatbildung am Kunststoffvorformling verhindert.

Die obige Aufgabe wird durch eine hohle Reckstange gelöst, die zumindest abschnittsweise zwischen einer inneren Wandung der Reckstange und der inneren Führung zur Temperaturregulierung einen Abstand aufweist und zudem die Merkmale des Patentanspruchs 1 umfasst.

Der Abstand, der zumindest abschnittsweise zwischen der inneren Wandung einer Außenhülle der Reckstange und der inneren Führung vorhanden ist, definiert einen luftgefüllten Raum. Dieser luftgefüllte Raum bildet in der vorliegenden Erfindung eine Isolierung der Reckstange. Die Isolierung dient dazu, dass die Reckstange während des Durchströmens des Temperierungsmediums durch die innere Führung bis in die Reckstangenspitze nicht unnötigerweise gekühlt bzw. temperiert wird. Diese Isolierfunktion wird somit durch eine sogenannte Luftkühlung hervorgerufen.

Die Luft wird durch das die innere Führung durchfließende Temperierungsmedium gekühlt. Die innere Führung wird durch ein Rohrsystem mit Vor- und Rücklauf gebildet, während die daran beabstandete Außenhülle als größeres Rohr ausgebildet ist. Als Temperierungsmedium können hierfür Kühlmittel verwendet werden, die gasförmige, flüssige oder feste Konsistenz aufweisen oder auch solche, die als Stoffgemische vorhanden sind. Diese Kühlmittel dienen lediglich dem Abtransport von Wärme von der Reckstangenspitze. Als Wärmeträger können neben Kühlmittel auch Heizmittel (Heizmedium) eingesetzt werden. In der vorliegenden Erfindung wird vorwiegend Wasser als Kühlmittel verwendet.

Da nicht die Reckstange an sich gekühlt wird, sondern lediglich die Reckstangenspitze, wird auch eine Prozessstabilisierung durch gleich bleibende Temperatur zwischen der Kontaktstelle, der Reckstangenspitze und der inneren Bodenwandung des Vorformlings hervorgerufen. Mit der vorliegenden Erfindung wird zudem kein Temperaturkonflikt zwischen der Reckstange und der Dichtung erzeugt.

Die innere Führung der hohlen Reckstange, die für die Temperaturregulierung vorhanden ist, kann aus mindestens einen Vor- und mindestens einen Rücklauf bestehen. Diese sind als separate parallele Leitungen ausgebildet und können zudem koaxial angeordnet sein. Die separaten parallelen Leitungen weisen zudem offene Enden auf, die über die Reckstangenspitze miteinander verbunden sind. Durch diese Konstruktion steht somit die Reckstangenspitze mit der inneren Führung im direkten Kontakt, so dass mit dieser Gestaltung die Reckstangenspitze keinen luftgefüllten Raum aufweist.

Die Reckstangenspitze kann als ein separates Bauteil hergestellt und anschließend an die hohle Reckstange angebracht werden. Um einen Kreislauf für das Temperierungsmedium zwischen den inneren Führungen herzustellen, können in der Reckstangespitze die Leitungen mittels Bohrungen eingebracht werden. Es besteht auch die Möglichkeit, dass die Spitze der Reckstange über ein Gießverfahren hergestellt wird. Hierfür können die Leitungen für das Temperierungsmedium bereits mit ins Gussteil eingegossen werden.

Durch diese Führung in der Reckstange kann das Temperaturregulierungsmedium durch den Vorlauf nach unten zur Reckstangenspitze strömen und wird anschließend über den Rücklauf wieder nach oben geleitet. Dieser Vorgang wird dadurch ermöglicht, dass in einer möglichen Ausführungsform der Vor- und der Rücklauf in der Reckstangenspitze über Bohrungen miteinander verbunden sind. Es werden senkrechte Bohrungen auf der Oberseite der Reckstangenspitze in Verlängerung der Führungen angebracht. Diese Bohrungen werden zusätzlich mit einer horizontalen Bohrung, die an der Seite der Reckstangenspitze angebracht ist, verbunden. Die offene Seite dieser nicht durchgehenden Bohrung ist verschlossen. Dadurch wird ein Kreislauf des Temperaturregulierungsmediums in der Reckstangenspitze erzeugt.

Durch diesen Temperaturregulierungskreislauf kann die Temperatur in der Reckstangenspitze so reguliert werden, dass immer ein optimaler Temperaturwert an der Kontaktstelle der Reckstangenspitze und der inneren Bodenwandung des Vorformlings erreicht werden kann.

Eine weitere mögliche Ausführungsform wäre, dass der Vorlauf und der Rücklauf als koaxiale Rohre ausgebildet sind. In diesem Fall würde das Temperaturregulierungsmedium über den mittig angeordneten Vorlauf kleineren Durchmesser in die Reckstangenspitze strömen. Dieser Vorlauf weist einen kleineren Durchmesser auf als der Rücklauf und ist zudem innerhalb des Rücklaufrohres angebracht.

Das Temperaturregulierungsmedium, das über den mittig angebrachten Vorlauf zur Reckstangenspitze hinab strömt, wird über den Rücklauf wieder nach oben geleitet. Die Vorlaufleitung taucht hierfür weiter in die Reckstangenspitze ein, damit ein verbesserter Rücktransport des Temperaturregulierungsmediums gewährleistet wird.

In dieser Ausführungsform ist somit nur die Rücklaufleitung von der inneren Wandung der Reckstange beabstandet angeordnet. Auch hier ist zwischen der äußeren Wand des Rücklaufs und der inneren Wandung der Außenhülle der Reckstange ein Luftspalt als Isolierung vorgesehen.

Die Reckstangenspitze wird in diesem Ausführungsbeispiel ebenso als ein separates Bauteil an die hohle Reckstange angebracht. Zuerst werden die Vor- und Rücklaufrohre positioniert. Anschließend wird die mit einer Vertiefung versehene Reckstangenspitze mit der äußeren Wandung des Rücklaufrohres verschweißt. Danach wird das eigentliche Rohr der Reckstange über die Vor- und Rücklaufrohre gestülpt. Das Ende des Reckstangenrohrs liegt auf einem Überstand der Reckstangenspitze auf und es wird an der Außenseite ein geradlinigen Übergang gebildet. Eine weitere Schweißnahtverbindung zwischen der Reckstangenspitze und der Außenseite der Reckstange gibt der hohl ausgebildeten Stange eine zusätzliche Stabilität, und eine bessere Befestigung zwischen der Reckstangenspitze an der Reckstange ist gewährleistet.

Die Reckstangenspitze und die hohle Reckstange bestehen vorzugsweise aus gut Wärme leitendem Material, bspw. aus Metall.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechend nicht immer den realen Größenverhältnissen, da einige Formen vereinfacht und andere Formen zur besseren Veranschaulichung vergrößert im Verhältnis zu anderen Elementen dargestellt sind.
Figur 1 zeigt einen schematischen Querschnitt einer Ausführungsform einer biaxialen Streckblas-Formgebungsvorrichtung.
Figur 2 zeigt einen Querschnitt, welcher den Endzustand zeigt, bei dem der Vorformling durch die Einleitung einer Blasluft geformt worden ist.
Figur 3 zeigt einen Querschnitt einer möglichen Ausführungsform einer Reckstangenspitze und einer Reckstange mit einem Vor- und Rücklauf.
Figur 4 zeigt einen Querschnitt einer weiteren möglichen Ausführungsform einer Reckstange mit einem Vorlauf und zwei Rückläufen.
Figur 5 zeigt in vergrößerter Darstellung einen horizontalen Schnitt A-A durch die Reckstange aus Figur 3.
Figur 6 zeigt in vergrößerter Darstellung einen horizontalen Schnitt B-B durch die Reckstange aus Figur 4.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele da, wie die erfindungsgemäße Vorrichtung oder das erfindungsgemäße Verfahren ausgestaltet sein können und stellen keine abschließende Begrenzung dar.

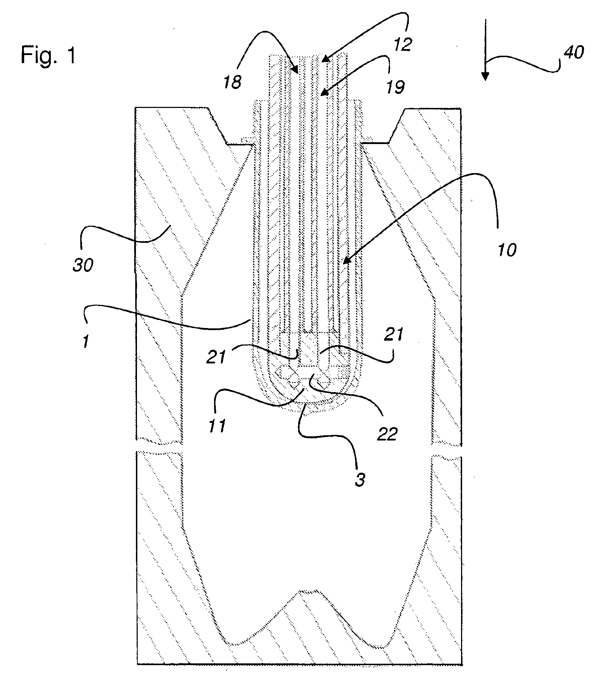

Figur 1 zeigt einen schematischen Querschnitt einer Ausführungsform, bei der ein Vorformling 1 in einer Blasform 30 festgeklemmt ist. Die Reckstange 10 wird in Längsrichtung 40 nach unten in den eingespannten Vorformling 1 bewegt, bis diese mit der inneren Bodenwandung 3 des Vorformlings 1 in Kontakt steht.

Die hohle Reckstange 10 ist mit einer inneren Führung 12 zur Temperaturregulierung ausgestattet. Diese innere Führung 12 ist in der vorliegenden Ausführungsform mit einem Vorlauf 18 und einem Rücklauf 19 versehen.

Damit die Reckstangenspitze 11 mittels Temperaturregulierungsmedium (nicht dargestellt) temperiert werden kann, muss eine Verbindung zwischen dem Vorlauf 18 und dem Rücklauf 19 und der Reckstangenspitze 11 hergestellt werden. Diese Verbindung in der Reckstangenspitze 11 wird mittels Bohrungen erreicht. Hierzu sind zwei senkrechte Bohrungen 21 im Abstand des Vorlaufs 18 und Rücklaufs 19 erforderlich und zudem noch eine seitliche, mittige Querbohrung 22, die die beiden senkrechten Bohrungen 21 schneidet, um einen Durchgang zu erzeugen. Diese einseitig offene Querbohrung 22 ist wieder auf geeignete Weise mit einem Dichtungsmedium 23 verschlossen.

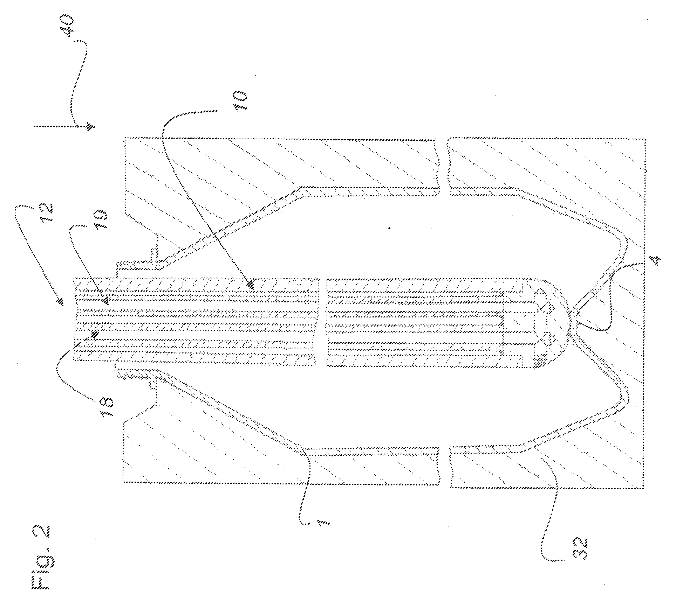

Figur 2 zeigt einen Querschnitt, welcher den Endzustand eines Vorformlings (nicht dargestellt) als Behälter 2 darstellt, der durch die Einleitung einer Blasluft geformt worden ist. Die hohle Reckstange 10 beginnt den Vorformling (nicht dargestellt) während des Streckblasens zu recken, indem sie sich in Längsrichtung 40 bewegt. Der Endzustand des Reckens ist erreicht, wenn die äußere Bodenwandung 4 des Vorformlings 1 die Blasform 30 erreicht hat, also wenn der Vorformling 1 den Blasformboden erreicht und berührt hat.

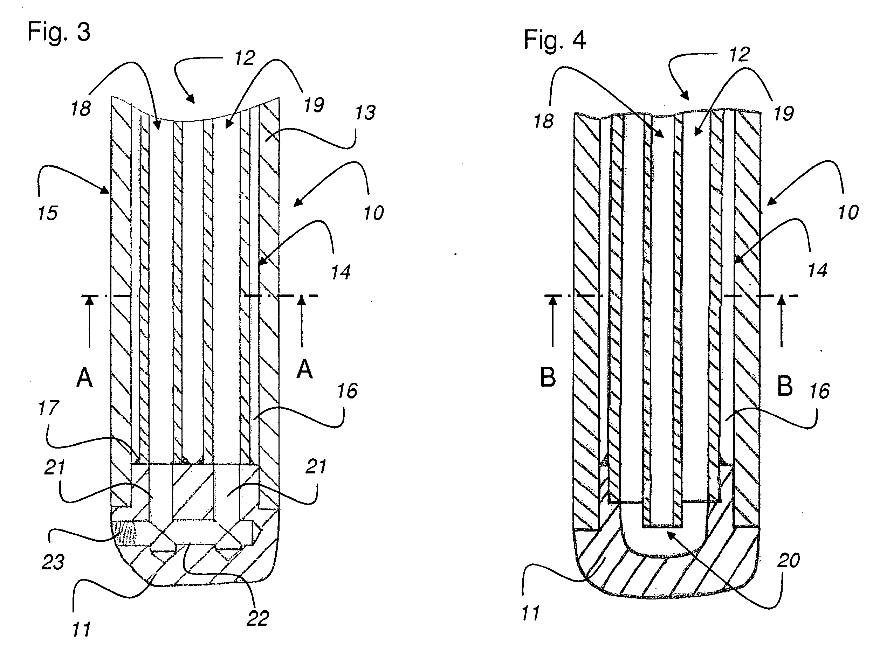

Figur 3 zeigt einen vergrößerten Ausschnitt einer möglichen Ausführungsform einer Reckstangenspitze 11 und einer Reckstange 10 mit einem Vorlauf 18 und einem Rücklauf 19. Aus dieser Figur 3 ist gut die Verbindung zwischen der inneren Führung 12 der Temperaturregulierung und der Reckstangenspitze 11 zu erkennen. Die Bohrungen werden vor dem Anbringen der Reckstangenspitze 11 an die Reckstange 10 gefertigt. Die Querbohrung 22 wird anschließend mit einem Dichtungsmedium 23 auf der Seite verschlossen. Auch durch die Genauigkeit der senkrecht gebohrten Bohrungen 21 kann von einem stabilen Kreislauf des Temperaturregulierungsmediums (nicht dargestellt) ausgegangen werden.

Der Vorlauf 18 und der Rücklauf 19 weisen einen Abstand zur inneren Wandung 14 der Außenhülle 13 der Reckstange 10 auf. Dieser Abstand ist als Luftspalt 16 ausgebildet und wird mit der angebrachten Reckstangenspitze 11 am Ende des parallelen Vorlaufs 18 und Rücklaufs 19 verschlossen.

Die Reckstangenspitze 11 ist mittels einer Schweißnaht 17 am Vorlauf 18 und Rücklauf 19 verbunden. Die Reckstangenspitze 11 wird mit der Reckstange 10 separat verbunden. Diese Verbindung entsteht durch eine Schweißnaht 17 der Reckstangenspitze 11 mit der äußeren Wandung 15 der Reckstange 10.

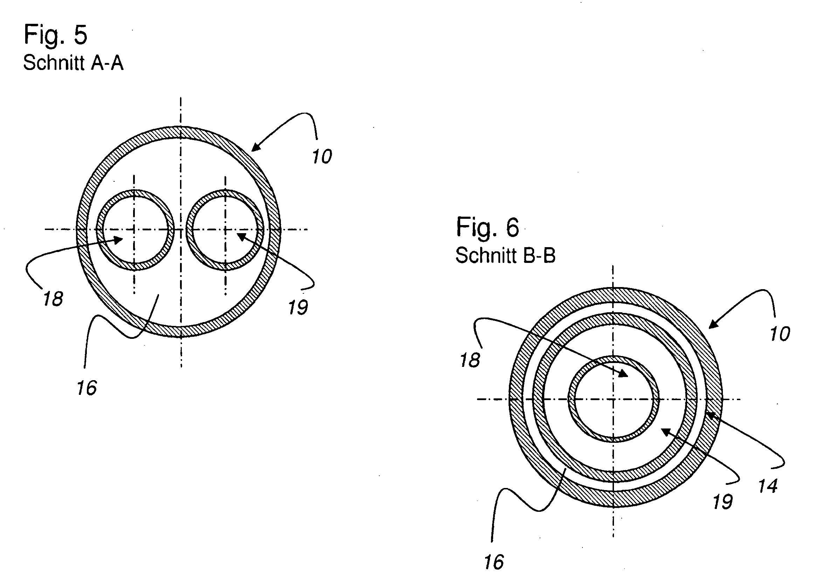

Figur 4 zeigt einen Querschnitt einer weiteren möglichen Ausführungsform einer Reckstangenspitze 11 und einer Reckstange 10. Für die innere Führung 12 der Temperaturregulierung wird hierfür ein Vorlauf 18 verwendet. Der Vorlauf 18 ist in Fig. 6 als ein Rohr ausgebildet, welches einen kleineren Durchmesser aufweist als das Rohr des Rücklaufs und zugleich weiter in die Reckstangenspitze 11 eindringt. Der Vorlauf 18 dient auch hier zum Einleiten des Temperaturregulierungsmediums (nicht dargestellt) in die Reckstangenspitze 11 und der Rücklauf 19, der koaxial um den Vorlauf 18 angeordnet ist, dient zum Ausströmen des Temperaturregulierungsmediums aus der Reckstangenspitze 11.

Zwischen dem Rücklauf 19 und der inneren Wandung 14 der Reckstange 10 ist ebenso der Abstand vorhanden wie in der ersten Ausführungsform. Dieser Abstand ist auch hier als Luftspalt 16 ausgebildet, um die Reckstange 10 während der Temperierung der Reckstangenspitze 11 durch die Einleitung des Temperaturregulierungsmediums nicht zu temperieren oder zu kühlen.

Die Reckstangenspitze 11 ist auch hier an die Reckstange 10 aufgebracht und mit dieser z.B. durch Verschweißen fest verbunden.

Figur 5 zeigt in vergrößerter Darstellung einen horizontalen Schnitt A-A der möglichen Ausführungsform der Reckstange 10 aus Figur 3. Es ist ersichtlich, dass der Vor- 18 und Rücklauf 19 aus zwei Rohren besteht, die in gleicher Höhe zueinander angeordnet sind. Durch die Ausbildung der Leitungen als Rohre wird der Luftspalt 16 zwischen diesen Leitungen und der inneren Wandung 14 der Reckstange 10 größer. Durch den größeren luftgefüllten Raum 16 ist eine bessere Isolierung der Reckstange 10 gewährleistet.

Figur 6 zeigt in vergrößerter Darstellung einen weiteren horizontalen Schnitt B-B der weiteren möglichen Ausführungsform der Reckstange 10 aus Figur 4. Aus diesem Schnitt ist ebenso die Anordnung des Vor- 18 und Rücklaufs 19 ersichtlich. Diese Leitungen sind als Rohre ausgebildet.

Zwischen dem Rücklauf 19 und der inneren Wandung 14 der Reckstange 10 ist ebenso der Abstand vorhanden, wie in der ersten Ausführungsform. Dieser Abstand ist auch hier als Luftspalt 16 ausgebildet.

Der Vorlauf 18 weist einen kleineren Durchmesser auf, als der Rücklauf 19 und ist zudem im Rücklaufrohr 18 mittig angeordnet.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

## Patentansprüche

1. Hohl ausgebildete Recksstange (10) einer Vorrichtung zum Blasformen von Behältern (2), wobei die Reckstange (10) ein Temperaturregulierungsmedium in einer inneren Führung (12) zur Temperaturregulierung aufweist, und die innere Führung (12) in der Reckstange (10) aus mindestens einem Vor- (18) und mindestens einem Rücklauf (19) ausgebildet ist **dadurch gekennzeichnet, dass** die innere Führung (12) und eine innere Wandung (14) einer Außenhülle (13) der Reckstange (10) isolierend beabstandet sind, wobei der Abstand als Luftspalt (16) ausgebildet ist und mit einer angebrachten Reckstangenspitze (11) am Ende des parallelen Vorlaufs (18) und Rücklaufs (19) verschlossen wird.

2. Vorrichtung nach Anspruch 1, **dadurch gekennzeichnet, dass** zwischen der inneren Führung (12) und der inneren Wandung (14) der Außenhülle (13) der Reckstange (10) ein luftgefüllter Raum (16) vorgesehen ist.

3. Vorrichtung nach einem der Ansprüche 1 bis 2, **dadurch gekennzeichnet, dass** die innere Führung (12) mit einer Reckstangenspitze (11) im direkten Kontakt steht.

4. Vorrichtung nach einem der Ansprüche 1 bis 3, **dadurch gekennzeichnet, dass** die Reckstangenspitze (11) eine Verbindung zwischen dem Vor- (18) und dem Rücklauf (19) aufweist.

5. Vorrichtung nach einem der Ansprüche 1 bis 4, **dadurch gekennzeichnet, dass** Vor-(18) und Rücklauf (19) durch separate parallele Leitungen gebildet sind, deren offene Enden (20) über die Reckstangenspitze (11) verbunden sind.

6. Vorrichtung nach Anspruch 5, **dadurch gekennzeichnet, dass** Vor- (18) und Rücklauf (19) jeweils beabstandet von einer umgebenden Außenhülle (13) sind und dazwischen ein luftgefüllter Raum (16) ist.

7. Vorrichtung nach einem der Ansprüche 1 bis 6, **dadurch gekennzeichnet, dass** Vor-(18) und Rücklauf (19) durch koaxial angeordnete Leitungen gebildet sind.

8. Vorrichtung nach Anspruch 7, **dadurch gekennzeichnet, dass** der Rücklauf (19) größeren Durchmessers beabstandet von der inneren Wandung (14) der Außenhülle (13) der Reckstange (10) angebracht ist, und dass der Vorlauf (18) kleineren Durchmessers koaxial innerhalb des Rücklaufs (19) angeordnet ist.

9. Vorrichtung nach einem der Ansprüche 1 bis 5, **dadurch gekennzeichnet, dass** die Reckstange (10) und die Reckstangenspitze (11) aus Metall bestehen.

## Claims

1. Hollow stretching rod (10) of a device for blow moulding containers (2), wherein the stretching rod (10) comprises a temperature control medium in an internal conduit (12) for controlling the temperature, and wherein said internal conduit (12) is designed to have at least one supply line (18) and at least one return line (19) in the stretching rod (10), said hollow stretching rod (10) being **characterised in that** an insulating distance is formed between the internal conduit (12) and an inner wall (14) of an outer enclosure (13) of the stretching rod (10), wherein the insulating distance is designed as an air gap (16) and is closed by means of a tip (11) disposed on the hollow stretching rod (10) at the end of the parallel supply line (18) and the return line (19).

2. Device according to claim 1, **characterised in that** an air-filled space (16) is provided between the internal conduit (12) and the inner wall (14) of the outer enclosure (13) of the stretching rod (10).

3. Device according to one of the claims 1 to 2, **characterised in that** the internal conduit (12) is in direct contact with a tip (11) of the stretching rod.

4. Device according to one of the claims 1 to 3, **characterised in that** the tip (11) of the stretching rod comprises a connection between the supply line (18) and the return line (19).

5. Device according to one of the claims 1 to 4, **characterised in that** the supply line (18) and the return line (19) are formed by separate, parallel conducts, and wherein the open ends (20) of said supply (18) and return (19) lines are connected via the tip (11) of the stretching rod.

6. Device according to claim 5, **characterised in that** the supply line (18) and the return line (19) are each arranged at a distance to the surrounding outer enclosure (13) and **in that** the space (16) in between is filled with air.

7. Device according to one of the claims 1 to 6, **characterised in that** the supply line (18) and the return line (19) are formed by coaxially arranged conducts.

8. Device according to claim 7, **characterised in that** the return line (19) has the larger diameter and is arranged at a greater distance from the inner wall (14) of the outer enclosure (13) of the stretching rod (10) and **in that** the supply line (18) has the smaller diameter and is arranged coaxially within the return line (19).

9. Device according to one of the claims 1 to 5, **characterised in that** the stretching rod (10) and the tip (11) of the stretching rod are made from metal.

## Revendications

1. Tige d'étirage (10) creuse d'un dispositif de moulage par soufflage de récipients (2), ladite tige d'étirage (10) présentant un milieu de régulation de température dans un guide intérieur (12) de régulation de température, et ledit guide intérieur (12) dans la tige d'étirage (10) étant formé d'au moins un aller (18) et d'au moins un retour (19), **caractérisée par le fait que** ledit guide intérieur (12) et une paroi intérieure (14) d'une enveloppe extérieure (13) de ladite tige d'étirage (10) sont espacés de manière isolante l'un de l'autre, l'écartement étant réalisé en tant que fente d'air (16) et étant fermé au bout des allure (18) et retour (19) parallèles par une pointe de tige d'étirage (11) montée.

2. Dispositif selon la revendication 1, **caractérisé par le fait qu'**un espace rempli d'air (16) est prévu entre ledit guide intérieur (12) et ladite paroi intérieure (14) de l'enveloppe extérieure (13) de la tige d'étirage (10).

3. Dispositif selon l'une quelconque des revendications 1 à 2, **caractérisé par le fait que** ledit guide intérieur (12) est en contact direct avec une pointe de tige d'étirage (11).

4. Dispositif selon l'une quelconque des revendications 1 à 3, **caractérisé par le fait que** ladite pointe de tige d'étirage (11) présente une jonction entre lesdits aller (18) et retour (19).

5. Dispositif selon l'une quelconque des revendications 1 à 4, **caractérisé par le fait que** lesdits aller (18) et retour (19) sont formés par des conduites parallèles séparées dont les extrémités ouvertes (20) sont reliées entre elles par la pointe de tige d'étirage (11).

6. Dispositif selon la revendication 5, **caractérisé par le fait que** lesdits aller (18) et retour (19) sont espacés chacun d'une enveloppe extérieure (13) qui les entoure et qu'un espace rempli d'air (16) est situé dans l'intervalle.

7. Dispositif selon l'une quelconque des revendications 1 à 6, **caractérisé par le fait que** lesdits aller (18) et retour (19) sont constitués par des conduites disposées de façon coaxiale.

8. Dispositif selon la revendication 7, **caractérisé par le fait que** ledit retour (19) de plus grand diamètre est monté à distance de la paroi intérieure (14) de l'enveloppe extérieure (13) de la tige d'étirage (10) et que ledit aller (18) de plus petit diamètre est disposé de façon coaxiale à l'intérieur du retour (19).

9. Dispositif selon l'une quelconque des revendications 1 à 5, **caractérisé par le fait que** ladite tige d'étirage (10) et ladite pointe de tige d'étirage (11) sont réalisées en métal.
